# EUROPÄISCHE PATENTSCHRIFT

(11) **EP 2 495 193 B1**
(45) Veröffentlichungstag und Bekanntmachung des Hinweises auf die Patenterteilung: **27.02.2013**
(21) Anmeldenummer: 11157029.7
(22) Anmeldetag: 04.03.2011
(51) Int. Cl.: B65G 47/82, B65G 47/91, B65G 61/00, B65B 21/12

(54) **Vorrichtung zum Ausschleusen von Behältern**
Container discharging apparatus
Dispositif d'évacuation de récipients

(43) Veröffentlichungstag der Anmeldung: 05.09.2012
(73) Patentinhaber: UHLMANN PAC-SYSTEME GmbH & Co. KG, 88471 Laupheim (DE)
(72) Erfinder: Heim, Ralf, 88471, Laupheim (DE); Noe, Joachim, 89584, Ehingen (DE)
(74) Vertreter: Wächter, Jochen

(56) Entgegenhaltungen:
- EP-A1- 0 387 152
- EP-A1- 0 876 957
- EP-A1- 1 847 488
- DE-A1- 10 162 282
- DE-A1- 19 549 454
- FR-A1- 2 219 061
- GB-A- 2 452 996

## Beschreibung

Die vorliegende Erfindung betrifft ein Verfahren und eine Vorrichtung zum Ausschleusen von aufrecht stehenden Behältern aus einer Transportvorrichtung.

Bei der Übergabe aufrecht stehender Behälter von einer getaktet arbeitenden Transportvorrichtung auf eine nachfolgende Speichereinrichtung bzw. eine kontinuierlich laufende zweite Transportvorrichtung werden derartige Vorrichtungen zum Ausschleusen der Behälter verwendet. In der pharmazeutischen Industrie kommen diese Vorrichtungen insbesondere dann zum Einsatz, wenn mit Tabletten, Kapseln oder Dragees gefüllte Behälter, beispielsweise kleine Flaschen oder Dosen, nach dem Befüllen und ihrem Verschließen mittels einer Kappe aus der Füll- und Schließstation auf eine weiterführende Transportvorrichtung übergeben werden sollen. Für derartige Vorrichtungen zum Ausschleusen von aufrecht stehenden Behältern existiert eine Reihe verschiedener Möglichkeiten.

DE 195 49 454 A1 offenbart eine gattungsgemäße Verpackungsvorrichtung für Flaschen end ents^prenchendes Verfahren, bei der die Flaschen in einer Reihe auf einem Transportband einer Verpackungsstation zugeführt werden. Dabei werden die Flaschen von zwei Schablonenhälften entlang der Mittelachse des Transportbandes justiert. Anschließend setzen Greifer an den Flaschen an, um diese nach unten in einem entsprechenden Verpackungsbehälter abzulegen.

FR 2 219 061 A1 beschreibt ein Verfahren zum automatischen Auffüllen großer Kisten mit Flaschen. Hierfür werden die Flaschen zunächst auf vier Bahnen verteilt, dann mittels Schiebern in seitliche Aufnahmen von Grundplatten geschoben, welche anschließend so gekippt werden, dass sich jeweils die Flaschenhälse gegenüberliegen. In dieser Position setzen die Greifer von oben an, heben die Flaschen und schwenken diese über die zu befüllende Kiste. Dort werden sie durch dieses Verfahren möglichst platzsparend abgelegt.

Wichtig für die Qualitätskontrolle ist hierbei, dass ausschließlich für gut befundene Behälter, d.h. Behälter mit einer korrekten Befüllung gemäß vorangegangener Untersuchungen, in die Transportvorrichtung zur Weiterverarbeitung gegeben werden, während als schlecht eingestufte Behälter in jedem Fall geradlinig weiterlaufen und somit auf einfache Weise aussortiert werden können, selbst wenn eine Fehlfunktion bei der Ausschleusung guter Flaschen auftreten sollte. Durch diese aktive Ausschleusung guter Behälter ist zu 100% gewährleistet, dass lediglich gute Behälter in den Verkauf gelangen.

Der vorliegenden Erfindung liegt die Aufgabe zugrunde, eine Vorrichtung zum Ausschleusen von als gut klassifizierten aufrecht stehenden Behältern aus einer Transportvorrichtung zu schaffen, die robust ist und eine hohe Übergabefrequenz der Behälter liefert, sowie ein entsprechendes Verfahren zum Ausschleusen der Behälter anzugeben.

Diese Aufgabe wird durch die Merkmale des Anspruchs 8 bzw. des Anspruchs 14 gelöst.

Das erfindungsgemäße Verfahren zum Ausschleusen von aufrecht stehenden Behältern aus einer ersten Transportvorrichtung weist folgende Schritte auf: Bereitstellen eines Seitenführungsabschnitts, der sich entlang einer Transportrichtung der Behälter in der ersten Transportvorrichtung erstreckt; Bereitstellen einer Greifereinheit, die eine Mehrzahl von Greifern zum Greifen der Behälter aufweist; im wesentlichen gemeinsames Bewegen des Seitenführungsabschnitts und der Greifereinheit aus einer Aufnahmeposition für die Behälter quer zur Transportrichtung; Bewegen der Greifereinheit in Transportrichtung zu einer Abgabeposition für die Behälter; Zurückbewegen des Seitenführungsabschnitts quer zur Transportrichtung in die Aufnahmeposition; und Zurückbewegen der Greifereinheit entgegen der Transportrichtung und anschließend quer zur Transportrichtung in die Aufnahmeposition.

Dieses erfindungsgemäße Verfahren gewährleistet eine besonders schnelle und robuste Übergabe von Behältern, wobei durch das aktive Ausschleusen von als gut eingestuften Behältern eine Weiterverarbeitung ungeeigneter Behälter selbst bei einer Fehlfunktion der Vorrichtung mit Sicherheit ausgeschlossen werden kann.

Vorzugsweise werden dass der Seitenführungsabschnitt und die Greifereinheit aus einer Aufnahmeposition für die Behälter im wesentlichen gemeinsam quer zur Transportrichtung bewegt. Auf diese Weise wird der Seitenführungsabschnitt, der während des Transports der Behälter in der ersten Transportvorrichtung noch als seitliches Begrenzungselement für den Behältertransport benötigt wird, auf einfache Weise aus dem Transportweg der Greifereinheit gefahren, ohne dass ein Zeitverlust auftritt.

Vorzugsweise ist der dritte Antrieb derart angesteuert, dass noch während oder nach der Querverschiebung des Seitenführungsabschnitts und der Greifereinheit die Greifereinheit in Transportrichtung zu einer Abgabeposition für die Behälter bewegt wird. Auf diese Weise wird die Bewegung der Greifereinheit von der Bewegung des Seitenführungsabschnitts entkoppelt und die Behälter werden parallel zur ersten Transportvorrichtung, aber versetzt dazu, der Weiterverarbeitung auf einfache Weise zugeführt. Wird der dritte Antrieb aktiviert, noch während die Greifereinheit mittels des zweiten Antriebs quer verschoben wird, so vollzieht die Greifereinheit eine Kurvenbewegung.

Vorzugsweise weist die Vorrichtung im Bereich der Abgabeposition eine zweite Transportvorrichtung zur Übernahme der von der Greifereinheit zugeführten Behälter auf. Dabei ist die zweite Transportvorrichtung vorzugsweise kontinuierlich in Transportrichtung angetrieben und die Geschwindigkeit der Bewegung der Greifereinheit in Transportrichtung an der Abgabeposition ist im wesentlichen identisch zur Geschwindigkeit der zweiten Transportvorrichtung. Damit gelingt es, die Behälter auf der kontinuierlich bewegten zweiten Transportvorrichtung abzustellen, ohne dass diese aufgrund einer beträchtlichen Geschwindigkeitsdifferenz zwischen Greifereinheit und zweiter Transportvorrichtung auf der zweiten Transportvorrichtung baumeln oder sogar umfallen.

Vorzugsweise wird dass nach der Verschiebung der Greifereinheit in Transportrichtung hin zur Abgabeposition der Seitenführungsabschnitt wieder quer zur Transportrichtung in die Aufnahmeposition zurückbewegt. Auf diese Weise kann der Seitenführungsabschnitt sehr schnell wieder seine eigentliche Aufgabe als Gegenhalteelement für die nachfolgenden Behälter in der ersten Transportvorrichtung erfüllen, während sich die bereits durch die Greifereinheit aufgegriffenen Behälter noch im Übergabeprozess auf die zweite Transportvorrichtung befinden.

Vorzugsweise wird nach oder während der Verschiebung des Seitenführungsabschnitts zurück in die Aufnahmeposition die Greifereinheit entgegen der Transportrichtung zurückbewegt und anschließend quer zur Transportrichtung in die Aufnahmeposition bewegt. Damit ist der Kreislauf wieder geschlossen und die Greifereinheit kann die nächsten Behälter aufnehmen.

Erfindungsgemäß weist die Vorrichtung zum Ausschleusen von aufrecht stehenden Behältern aus einer ersten Transportvorrichtung einen Seitenführungsabschnitt auf, der sich entlang einer Transportrichtung der Behälter in der ersten Transportvorrichtung erstreckt, sowie eine Greifereinheit, die eine Mehrzahl von Greifern zum Greifen der Behälter aufweist. Dabei ist der Seitenführungsabschnitt über einen ersten Antrieb quer zur Transportrichtung bewegbar und die Greifereinheit ist sowohl über einen zweiten Antrieb quer zur Transportrichtung als auch über einen dritten Antrieb in und entgegen der Transportrichtung bewegbar. Die Greifereinheit ragt in der Aufnahmeposition dabei durch einen horizontalen Schlitz im Seitenführungsabschnitt hindurch.

Auf diese Weise können die Behälter schnell und robust der weiterführenden Bearbeitung zugeführt werden, wobei ausgeschlossen ist, dass als schlecht klassifizierte Behälter der Weiterbearbeitung zugeführt werden. Außerdem wird eine optimale Abstützung von Behältern unterschiedlicher Größe durch den Seitenführungsabschnitt gewährleistet und es kann eine Vielzahl unterschiedlicher Behältergrößen sicher gegriffen werden, während gleichzeitig eine Abstützung der Behälter von zwei oberhalb und unterhalb des Schlitzes verlaufenden Schienen während des Betriebs der ersten Transportvorrichtung erfolgt.

Im Sinne einer exakten Einstellung des Bewegungsablaufs sind der erste, zweite und dritte Antrieb vorzugsweise Servomotoren.

In einer vorteilhaften Ausführungsform ist der erste Antrieb über eine quer zur Transportrichtung angeordnete Spindel mit dem Seitenführungsabschnitt verbunden. Dadurch benötigt die gesamte Konstruktion zur Bewegung des Seitenführungsabschnitts äußerst wenig Platz in Transportrichtung.

Der zweite Antrieb ist vorzugsweise über einen quer zur Transportrichtung verlaufenden Riementrieb mit der Greifereinheit verbunden.

Zur einfachen Überlagerung der Bewegungen der Greifereinheit in zwei Richtungen sind die Greifereinheit und der zweite Antrieb vorzugsweise an einem Schlitten befestigt, der vom dritten Antrieb in und entgegen der Transportrichtung bewegbar ist. Dabei ist es vorteilhaft, wenn der dritte Antrieb über einen parallel zur Transportrichtung verlaufenden Riementrieb mit dem Schlitten verbunden ist.

Weitere Merkmale und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform der erfindungsgemäßen Vorrichtung zum Ausschleusen von aufrecht stehenden Behältern in einer Aufnahmeposition der Behälter;
- Fig. 2: ist eine Draufsicht auf die Anordnung aus Fig. 1;
- Fig. 3: ist eine Perspektivansicht der Ausführungsform aus Fig. 1 bei zurückgezogenem Seitenführungsabschnitt und zurückgezogener Greifereinheit;
- Fig. 4: ist eine Draufsicht auf die Anordnung aus Fig. 3;
- Fig. 5: ist eine Perspektivansicht der Ausführungsform aus Fig. 1, bei der sich die Greifereinheit in einer Abgabeposition für die Behälter befindet;
- Fig. 6: ist eine Draufsicht auf die Anordnung aus Fig. 5;
- Fig. 7: ist eine perspektivische Detaildarstellung einer bevorzugten Ausgestaltung der Antriebe einer erfindungsgemäßen Vorrichtung zum Ausschleusen von aufrecht stehenden Behältern; und
- Fig. 8: ist eine Detailansicht der Greifereinheit.

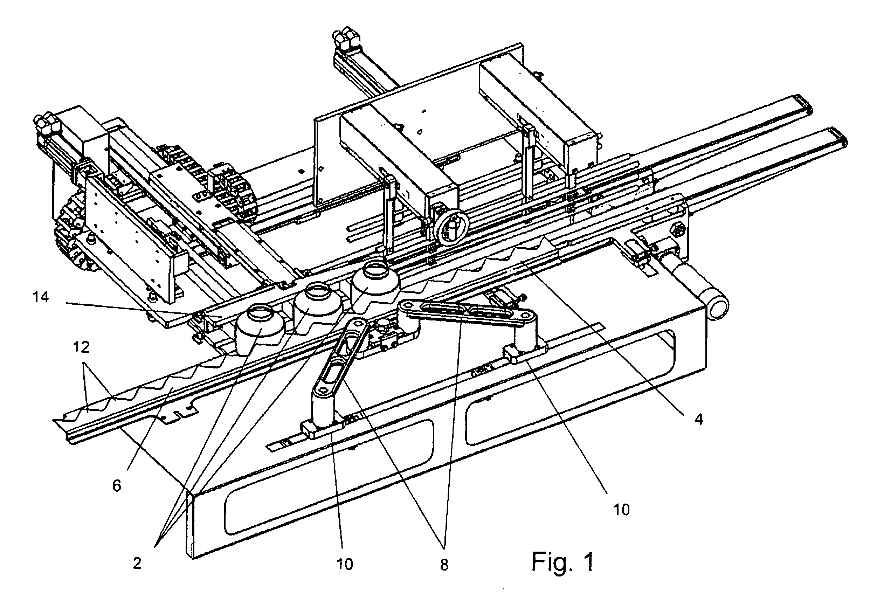

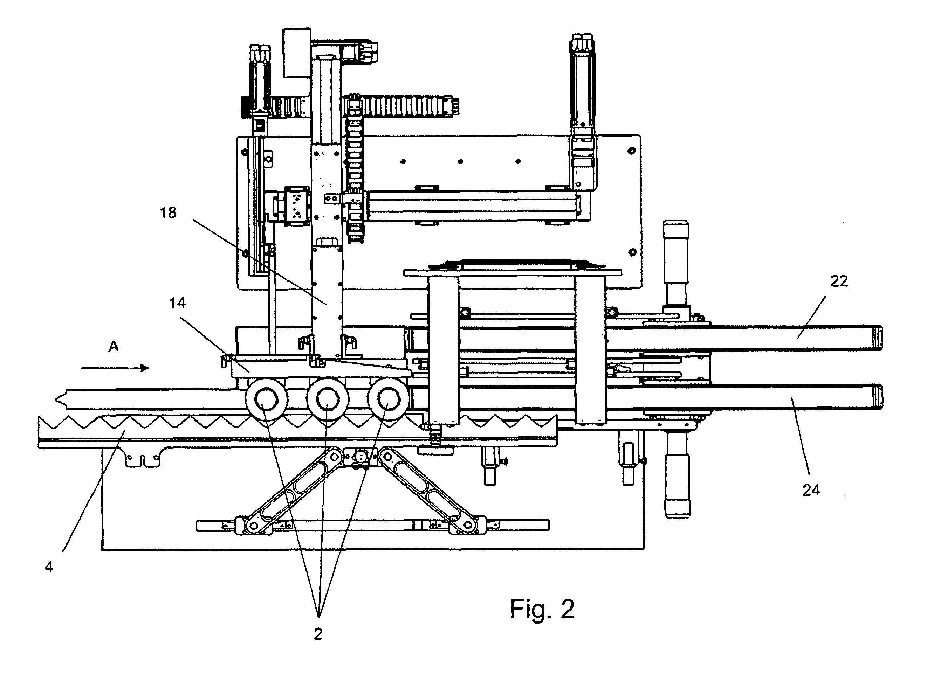

In Fig. 1 und 2 ist eine Vorrichtung zum Ausschleusen von aufrecht stehenden Behältern 2 dargestellt, die sich in einer Aufnahmeposition für die Behälter 2 befindet.

Die Behälter 2 wurden zuvor durch eine erste Transportvorrichtung 4 vorzugsweise getaktet zur Vorrichtung zum Ausschleusen der Behälter 2 an die dargestellte Übergabeposition bewegt.

Im dargestellten Beispielsfall besteht die erste Transportvorrichtung 4 aus einem Transportrechen 6, der sowohl in Transportrichtung A der Behälter 2 als auch quer zu dieser Transportrichtung hin- und herverschiebbar gelagert ist. Die Verschiebung des Transportrechens 6 in Transportrichtung und quer zur Transportrichtung erfolgt vorzugsweise über mehrere Paare von Schenkeln 8 (in Fig. 1 und 2 ist jeweils nur ein Paar dargestellt), die drehbar am Transportrechen 6 gelagert sind, wobei jedes Paar von Schenkeln 8 eine sich vom Transportrechen 6 weg öffnende V-Form bildet. Jeder der Schenkel 8 eines Paares ist auf der dem Transportrechen 6 abgewandten Seite drehbar mit einem Verschiebungselement 10 verbunden. Die Verschiebungselemente 10 der linken Schenkel 8 und die Verschiebungselemente 10 der rechten Schenkel 8 der Schenkelpaare sind jeweils mit einem eigenen Antrieb (nicht dargestellt) unabhängig voneinander bewegbar. Durch gleichmäßiges Verfahren der beiden Schenkel 8 eines jeden Paars erfolgt eine Hin- und Herbewegung des Transportrechens 6 in Transportrichtung A, während durch eine auseinander bzw. aufeinander zu gerichtete Bewegung der Verschiebungselemente 10 eines Schenkelpaars eine Hin- und Herbewegung des Transportrechens 6 quer zur Transportrichtung erzeugt wird. Die Behälter 2 sind während des Transports mit einem Teil ihres Umfangs in V-förmigen oder U-förmigen Ausnehmungen 12 des Transportrechens 6 aufgenommen und werden bei Bewegung des Transportrechens 6 in Transportrichtung A mitbewegt. Hierzu ist es notwendig, dass auf der dem Transportrechen 6 gegenüberliegenden Seite ein Gegenhalteelement für die Behälter 2 angeordnet ist, damit die Behälter bei Bewegung des Transportrechens 6 in Transportrichtung A in die Ausnehmungen 12 gedrückt bleiben und nicht zur Seite hin ausweichen können. Von diesem Gegenhalteelement ist in den Figuren lediglich ein hinterer Seitenführungsabschnitt 14 dargestellt, der bereits Bestandteil der Vorrichtung zum Ausschleusen der Behälter 2 ist.

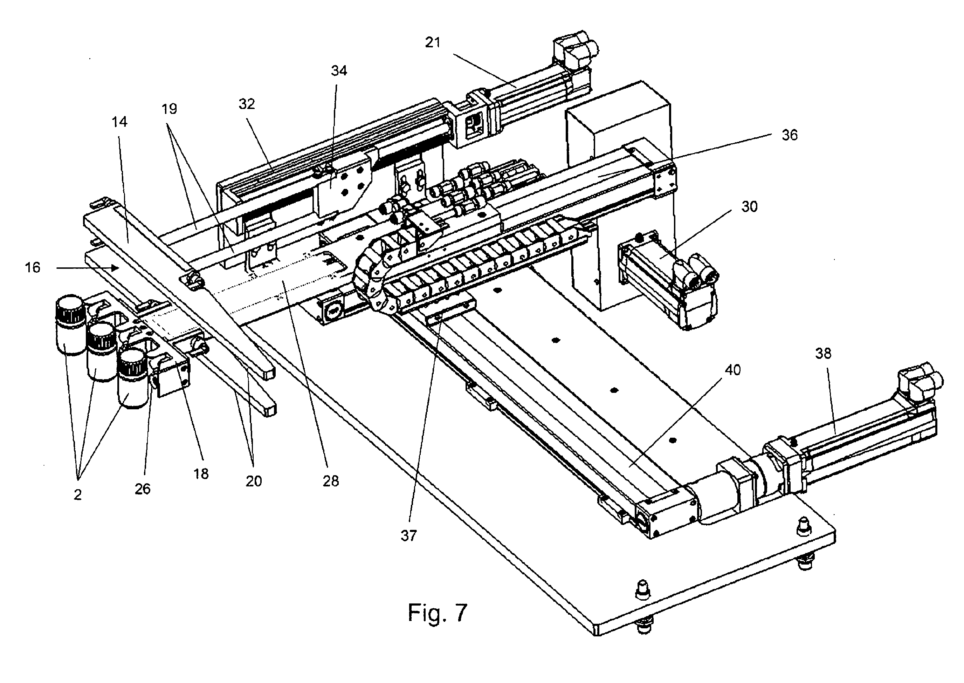

Wie am besten aus Fig. 7 hervorgeht, weist der Seitenführungsabschnitt vorzugsweise einen horizontalen Schlitz 16 auf, durch den in der Aufnahmeposition der Behälter 2 eine Greifereinheit 18 hindurchragt. Der Schlitz 16 ist zumindest in einem hinteren Bereich des Seitenführungsabschnitts 14 nach außen offen und ermöglicht eine Bewegung der Greifereinheit 18 in Transportrichtung A aus dem Bereich des Seitenführungsabschnitts 14 hinaus. Die Abstützung der Behälter 2 erfolgt im Seitenführungsabschnitt 14 durch zwei oberhalb und unterhalb des Schlitzes 16 verlaufende Schienen 20, die zu den Behältern 2 hin eine möglichst glatte und wenig reibkräftige Oberfläche aufweisen. Mit dieser Anordnung des Schlitzes 16 und der beiden Schienen 20 kann eine Vielzahl unterschiedlicher Behältergrö-βen sicher von der Greifereinheit 18 gegriffen werden, während gleichzeitig eine Abstützung der Behälter 2 durch die Schienen 20 während des Betriebs der ersten Transportvorrichtung 4 erfolgt.

Ebenso ist es denkbar, dass bei bestimmten Behälterformen der sich in Transportrichtung erstreckende Seitenführungsabschnitt 14 keinen Schlitz 16 aufweist, und die Greifereinheit oberhalb oder unterhalb des Seitenführungsabschnitts 14 verläuft.

Der Seitenführungsabschnitt 14 ist über zwei seitlich angeordnete Verbindungsstangen 19 oder ein anderes Verbindungselement mit einem ersten Antrieb 21 verbunden, der für eine Hin- und Herbewegung des Seitenführungsabschnitts 14 quer zur Transportrichtung A sorgt.

Im dargestellten Beispielsfall ist der erste Antrieb 21 als Servomotor ausgebildet und treibt eine quer zur Transportrichtung A verlaufende Spindel 32 an, auf der ein Basiselement 34 hin- und herverschieblich gelagert ist, welches wiederum mit den Verbindungsstangen 19 verbunden ist. Selbstverständlich gibt es für den Fachmann eine ganze Reihe weiterer Möglichkeiten, um den Seitenführungsabschnitt 14 quer zur Transportrichtung hin- und herverschieblich auszugestalten.

Im rechten Bereich von Fig. 2 ist eine zweite Transportvorrichtung 22 dargestellt, die versetzt zur ersten Transportvorrichtung 4 angeordnet ist und die Behälter 2 nach deren Ausschleusung in Transportrichtung A weitertransportiert. Im dargestellten Ausführungsbeispiel ist die zweite Transportvorrichtung 22 ein kontinuierlich umlaufendes Transportband, auf dem die Behälter 2 von der Greifereinheit 18 abgestellt werden.

Dies bedeutet, dass lediglich bei Aktivierung der erfindungsgemäßen Vorrichtung zum Ausschleusen der Behälter 2 die Behälter 2 auf die zweite Transportvorrichtung 22 gelangen, welche die Behälter 2 dann der weiteren Verarbeitung zuführt. Als schlecht eingestufte Behälter 2 werden hingegen durch die Greifereinheit 18 nicht ergriffen und damit nicht seitlich auf die zweite Transportvorrichtung 22 versetzt, sondern werden geradlinig weiterbewegt und gelangen auf einen Ausschusspfad 24. Damit ist sichergestellt, dass selbst bei einem Ausfall der erfindungsgemäßen Vorrichtung zum Ausschleusen von Behältern 2 keine als schlecht klassifizierten Behälter 2 der weiteren Verarbeitung zugeführt werden können.

Wie wiederum am besten aus Fig. 7 ersichtlich ist, umfasst die Greifereinheit 18 mehrere Greifer 26, die vorzugsweise mit Vakuum betrieben sind. Ebenso sind mechanische Greifer verwendbar. Die Greifer 26 sind vorzugsweise getrennt voneinander angesteuert und über eine gemeinsame Verbindungsschiene 28 oder ein anderes Verbindungselement mit einem zweiten Antrieb verbunden, der für eine Hin- und Herbewegung der Greifereinheit 18 quer zur Transportrichtung A sorgt.

Der zweite Antrieb 30 für die Hin- und Herbewegung der Greifereinheit 18 quer zur Transportrichtung A ist vorzugsweise ebenfalls als Servomotor ausgestaltet, der im dargestellten Beispielsfall über einen Riementrieb 36, der quer zur Transportrichtung A verläuft, für eine Bewegungsübertragung auf die an diesem Riementrieb befestigte Verbindungsschiene 28 sorgt. Auch hier ergeben sich für den Fachmann ohne weiteres alternative Möglichkeiten zur Hin- und Herbewegung der Greifereinheit 18 quer zur Transportrichtung A.

Wichtig ist hierbei, dass zur Bildung eines Kreuzschlittens sämtliche Komponenten, die für die Bewegung der Greifereinheit 18 quer zur Transportrichtung A verantwortlich sind, auf einem Schlitten 37 angeordnet sind, der wiederum mittels eines dritten Antriebs 38, vorzugsweise wiederum eines Servomotors, in und entgegen der Transportrichtung A verschiebbar ist. Hierzu kann wiederum ein Riementrieb 40 den dritten Antrieb 38 mit dem Schlitten 37 verbinden, wobei der Riementrieb 40 in diesem Fall parallel zur Transportrichtung A umläuft.

Wie in Fig. 7 dargestellt ist, kann die Greifereinheit 18 derart weit über den Seitenführungsabschnitt 14 vorragen, dass sich die Verbindungsschiene 28 im Bereich des Schlitzes 16 befindet. Ebenso ist es aber möglich, dass lediglich die Greifer 26 geringfügig nach vorne aus dem Schlitz 16 hervorragen.

Die erfindungsgemäße Vorrichtung zum Ausschleusen von Behältern 2 kann außer mit dem dargestellten Transportrechen 6 auch in Kombination mit einer anderen ersten Transportvorrichtung 4 verwendet werden, bei der ein Seitenführungsabschnitt 14 für die Behälter 2 benötigt wird.

Im Folgenden wird die Funktionsweise der erfindungsgemäßen Vorrichtung erläutert. Wie bereits erwähnt, befinden sich die Behälter 2 in den Fig. 1 und 2 in einer Ausgangsstellung für die Betätigung der erfindungsgemäßen Vorrichtung zum Ausschleusen der Behälter 2. Sowohl der Seitenführungsabschnitt 14 als auch die Greifereinheit 18 befinden sich in einer Aufnahmeposition für die Behälter 2. Die Greifer 26 werden aktiviert und ergreifen die entsprechende Anzahl von Behältern 2, im vorliegenden Fall drei Behälter 2.

Der erste Antrieb 21 für den Seitenführungsabschnitt 14 und der zweite Antrieb 30 für die Greifereinheit 18 werden nun derart betätigt, dass der Seitenführungsabschnitt 14 und die Greifereinheit 18 aus der Aufnahmeposition für die Behälter 2 gemeinsam oder geringfügig zeitlich versetzt quer zur Transportrichtung A bewegt werden.

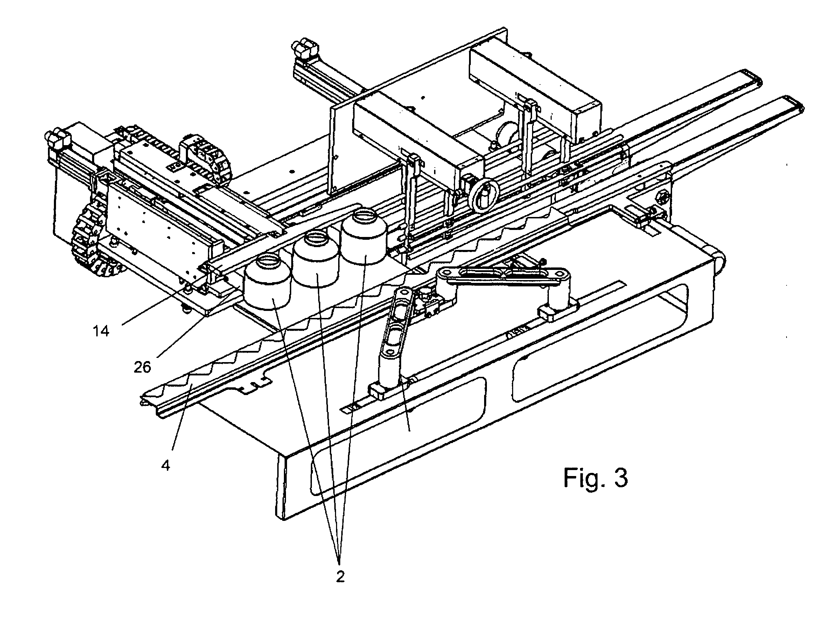

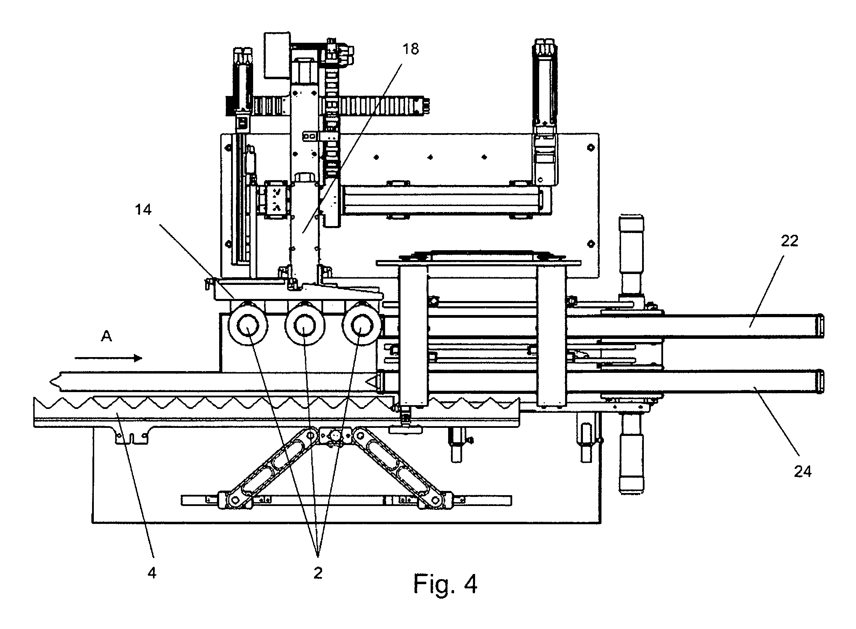

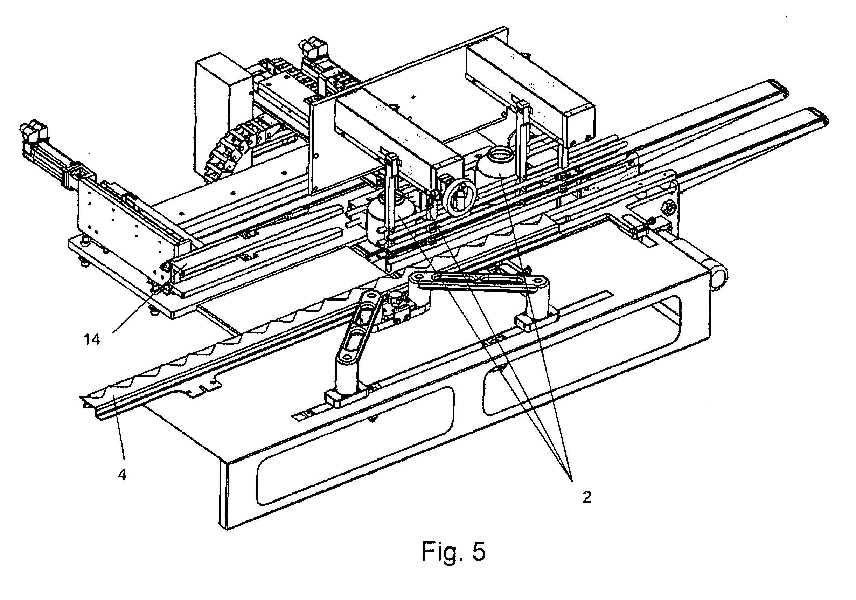

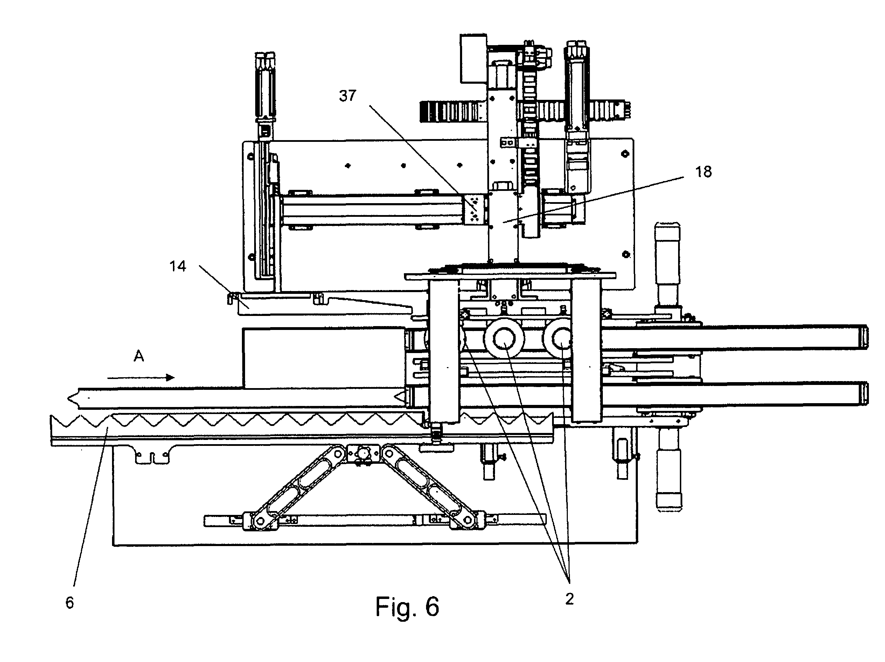

Das Ergebnis dieser Bewegung ist in Fig. 3 und 4 dargestellt. Ausgehend aus dieser Position wird nun der dritte Antrieb 38 derart betätigt, dass nach der Querverschiebung des Seitenführungsabschnitts 14 und der Greifereinheit 18 die Greifereinheit 18 nunmehr alleine in Transportrichtung A in eine Abgabeposition für die Behälter 2 bewegt wird. Diese Position ist in den Fig. 5 und 6 dargestellt. Ebenso ist es möglich, dass der dritte Antrieb 38 aktiviert wird, noch während die Querverschiebung stattfindet, so dass die Greifereinheit eine Kurvenbewegung vollzieht.

An der Abgabeposition werden die Behälter 2 an die zweite Transportvorrichtung 22 übergeben. Hierbei erfolgt die Übergabe vorzugsweise noch während der Bewegung der Greifereinheit 18, die mit derselben oder geringfügig anderen Geschwindigkeit in Transportrichtung A bewegt wird wie die zweite Transportvorrichtung 22. Auf diese Weise wird verhindert, dass die Behälter 2 beim Aufsetzen auf die zweite Transportvorrichtung 22 aufgrund einer zu hohen Geschwindigkeitsdifferenz taumeln oder umkippen. Während des Übergabevorgangs muss die Greifereinheit 18 außerdem ein wenig quer zur Transportrichtung A nach hinten bewegt werden, um die Behälter 2 vollständig freizugeben.

Aus der in Fig. 5 und 6 dargestellten Position wird nun aus Gründen der Zeitersparnis zunächst der Seitenführungsabschnitt 14 wieder quer zur Transportrichtung A in die Aufnahmeposition zurückbewegt. Dies kann noch während der Übergabe der Behälter 2 durch die Greifereinheit 18 auf die zweite Transportvorrichtung 22 oder sogar vor dieser Übergabe erfolgen. Wichtig ist hierbei nur, dass vor der Rückbewegung des Seitenführungsabschnitts 14 die von der Greifereinheit 18 ergriffenen Behälter 2 in Transportrichtung A aus dem Bereich des Seitenführungsabschnitts 14 vollständig heraustransportiert sind. Ab diesem Zeitpunkt kann der Seitenführungsabschnitt 14 wieder in die Aufnahmeposition zurückbewegt werden, wo er bereits seine eigentliche Funktion als Gegenhalteelement für die nächsten, durch die erste Transportvorrichtung 4 herantransportierten Behälter 2 dient.

Unmittelbar nach der Übergabe der Behälter 2 an die zweite Transportvorrichtung 22 werden der zweite und dritte Antrieb 30, 38 betätigt, sodass nach oder noch während der Verschiebung des Seitenführungsabschnitts 14 zurück in die Aufnahmeposition auch die Greifereinheit 18 entgegen der Transportrichtung A zurückbewegt wird und anschließend quer zur Transportrichtung A in die Aufnahmeposition bewegt wird. Damit kann der Ausschleusezyklus wieder von vorne beginnen. Typische Taktzeiten für einen solchen Zyklus liegen bei knapp über 1 s.

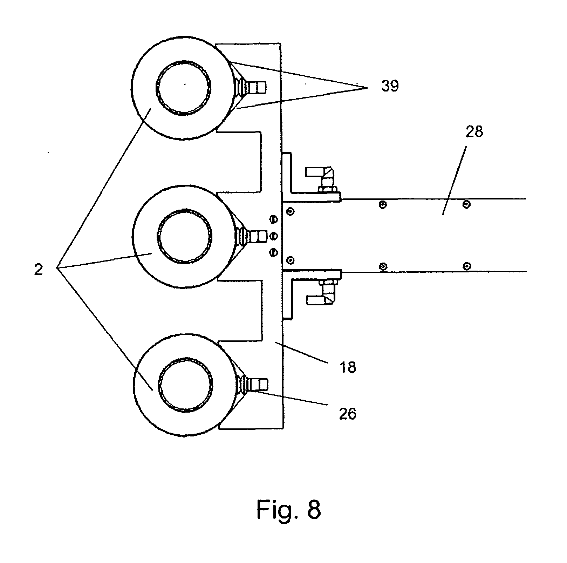

In Fig. 8 sind Details der Greifer 26 abgebildet. Jeder vakuumbetriebene Greifer weist für eine Anpassung an unterschiedliche Behältergrößen und -formen vorzugsweise im wesentlichen dreieckige Aufnahmen 39 auf, die sich nach außen verbreitern. Durch die Kombination von Vakuumansaugung und dreieckförmigen Aufnahmen 39 können die Behälter 2 sicher auf die zweite Transportvorrichtung 22 übergesetzt werden.

## Patentansprüche

1. Verfahren zum Ausschleusen von aufrecht stehenden Behältern (2) aus einer ersten Transportvorrichtung (4) mit folgenden Schritten:
Bereitstellen eines Seitenführungsabschnitts (14), der sich entlang einer Transportrichtung (A) der Behälter (2) in der ersten Transportvorrichtung (4) erstreckt;
Bereitstellen einer Greifereinheit (18), die eine Mehrzahl von Greifern (26) zum Greifen der Behälter (2) aufweist;
**gekennzeichnet durch** die Schritte :
im wesentlichen gemeinsames Bewegen des Seitenführungsabschnitts (14) und der Greifereinheit (18) aus einer Aufnahmeposition für die Behälter (2) quer zur Transportrichtung (A);
Bewegen der Greifereinheit (18) in Transportrichtung (A) zu einer Abgabeposition für die Behälter (2);
Zurückbewegen des Seitenführungsabschnitts (14) quer zur Transportrichtung (A) in die Aufnahmeposition; und
Zurückbewegen der Greifereinheit (18) entgegen der Transportrichtung (A) und anschließend quer zur Transportrichtung (A) in die Aufnahmeposition.

2. Verfahren nach Anspruch 1, **dadurch gekennzeichnet, dass** der Seitenführungsabschnitt (14) und die Greifereinheit (18) aus einer Aufnahmeposition für die Behälter (2) im wesentlichen gemeinsam quer zur Transportrichtung (A) bewegt werden.

3. Verfahren nach Anspruch 2, **dadurch gekennzeichnet, dass** noch während oder nach der Querverschiebung des Seitenführungsabschnitts (14) und der Greifereinheit (18) die Greifereinheit (18) in Transportrichtung (A) zu einer Abgabeposition für die Behälter (2) bewegt wird.

4. Verfahren nach Anspruch 3, **dadurch gekennzeichnet, dass** im Bereich der Abgabeposition eine zweite Transportvorrichtung (22) zur Übernahme der von der Greifereinheit (18) zugeführten Behälter (2) vorgesehen ist.

5. Verfahren nach Anspruch 4, **dadurch gekennzeichnet, dass** die zweite Transportvorrichtung (22) kontinuierlich in Transportrichtung (A) angetrieben ist, und dass die Geschwindigkeit der Bewegung der Greifereinheit (18) in Transportrichtung (A) an der Abgabeposition im wesentlichen identisch zur Geschwindigkeit der zweiten Transportvorrichtung (22) ist.

6. Verfahren nach einem der Ansprüche 3 bis 5, **dadurch gekennzeichnet, dass** nach der Verschiebung der Greifereinheit (18) in Transportrichtung (A) hin zur Abgabeposition der Seitenführungsabschnitt (14) wieder quer zur Transportrichtung (A) in die Aufnahmeposition zurückbewegt wird.

7. Verfahren nach Anspruch 6, **dadurch gekennzeichnet, dass** nach oder noch während der Verschiebung des Seitenführungsabschnitts (14) zurück in die Aufnahmeposition die Greifereinheit (18) entgegen der Transportrichtung (A) zurückbewegt wird und anschließend quer zur Transportrichtung (A) in die Aufnahmeposition bewegt wird.

8. Vorrichtung zum Ausschleusen von aufrecht stehenden Behältern (2) aus einer ersten Transportvorrichtung (4) mit:
einem Seitenführungsabschnitt (14), der sich entlang einer Transportrichtung (A) der Behälter in der ersten Transportvorrichtung (4) erstreckt; und
einer Greifereinheit (18), die eine Mehrzahl von Greifern (26) zum Greifen der Behälter (2) aufweist;
wobei der Seitenführungsabschnitt (14) über einen ersten Antrieb (21) quer zur Transportrichtung (A) bewegbar ist und die Greifereinheit (18) sowohl über einen zweiten Antrieb (30) quer zur Transportrichtung (A) als auch über einen dritten Antrieb (38) in und entgegen der Transportrichtung (A) bewegbar ist;
**dadurch gekennzeichnet, dass**
die Greifereinheit (18) in der Aufnahmeposition durch einen horizontalen Schlitz (16) im Seitenführungsabschnitt (14) hindurchragt.

9. Vorrichtung nach Anspruch 8, **dadurch gekennzeichnet, dass** der erste Antrieb (21), der zweite Antrieb (30) und der dritte Antrieb (38) Servomotoren sind.

10. Vorrichtung nach Anspruch 8 oder 9, **dadurch gekennzeichnet, dass** der erste Antrieb (21) über eine quer zur Transportrichtung (A) angeordnete Spindel (32) mit dem Seitenführungsabschnitt (14) verbunden ist.

11. Vorrichtung nach einem der Ansprüche 8 bis 10, **dadurch gekennzeichnet, dass** der zweite Antrieb (30) über einen quer zur Transportrichtung (A) verlaufenden Riementrieb (36) mit der Greifereinheit (18) verbunden ist.

12. Vorrichtung nach einem der Ansprüche 8 bis 11, **dadurch gekennzeichnet, dass** die Greifereinheit (18) und der zweite Antrieb (30) an einem Schlitten (37) befestigt sind, der vom dritten Antrieb (38) in und entgegen der Transportrichtung (A) bewegbar ist.

13. Vorrichtung nach Anspruch 12, **dadurch gekennzeichnet, dass** der dritte Antrieb (38) über einen parallel zur Transportrichtung (A) verlaufenden Riementrieb (40) mit dem Schlitten (37) verbunden ist.

## Claims

1. Method for discharging upright containers (2) from a first transport device (4), comprising the following steps of:
providing a lateral guide portion (14) extending along a transport direction (A) of the containers (2) in the first transport direction (4);
providing a gripper unit (18) comprising a plurality of grippers (26) for gripping the containers (2), **characterised by** the steps of:
moving the lateral guide portion (14) and the gripper unit (18) substantially together from a pick-up position for the containers (2) transversely to the transport direction (A);
moving the gripper unit (18) in the transport direction (A) to a discharge position for the containers (2);
moving the lateral guide portion (14) transversely to the transport direction (A) back to the pick-up position; and
moving the gripper unit (18) against the transport direction (A) and then transversely to the transport direction (A) back to the pick-up position.

2. Method according to claim 1, **characterised in that** the lateral guide portion (14) and the gripper unit (18) are moved substantially together from a pick-up position for the containers (2) transversely to the transport direction (A).

3. Method according to claim 2, **characterised in that** the gripper unit (18) is moved in the transport direction (A) to a discharge position for the containers (2) either during or after the transverse movement of the lateral guide portion (14) and of the gripper unit (18).

4. Method according to claim 3, **characterised in that** a second transport device (22) for accepting the containers (2) supplied by the gripper unit (18) is provided in the region of the discharge position.

5. Method according to claim 4, **characterised in that** the second transport device (22) is driven continuously in the transport direction (A), and **in that** the speed of the movement of the gripper unit (18) in the transport direction (A) to the discharge position is substantially the same as the speed of the second transport device (22).

6. Method according to any of claims 3 to 5, **characterised in that**, after the gripper unit (18) has been moved forward in the transport direction (A) to the discharge position, the lateral guide portion (14) is moved back again transversely to the transport direction (A) into the pick-up position.

7. Method according to claim 6, **characterised in that** the gripper unit (18) is moved against the transport direction (A), and then transversely to the transport direction (A) back into the pick-up position either after or during the movement of the lateral guide portion (14) back into the pick-up position.

8. Device for discharging upright containers (2) from a first transport device (4), comprising:
a lateral guide portion (14) extending along a transport direction (A) of the containers in the first transport direction (4); and
a gripper unit (18) comprising a plurality of grippers (26) for gripping the containers (2), the lateral guide portion (14) being able to be moved transversely to the transport direction (A) by a first drive (21), and the gripper unit (18) being able to be moved transversely to the transport direction (A) by a second drive (30), as well as in and against the transport direction (A) by a third drive (38), **characterised in that** the gripper unit (18) protrudes through a horizontal slot (16) in the lateral guide portion (14) in the pick-up position.

9. Device according to claim 8, **characterised in that** the first drive (21), the second drive (30) and the third drive (38) are servo motors.

10. Device according to either claim 8 or claim 9, **characterised in that** the first drive (21) is connected to the lateral guide portion (14) by a spindle (32) which is arranged transversely to the transport direction (A).

11. Device according to any of claims 8 to 10, **characterised in that** the second drive (30) is connected to the gripper unit (18) by a belt drive (36) running transversely to the transport direction (A).

12. Device according to any of claims 8 to 11, **characterised in that** the gripper unit (18) and the second drive (30) are attached to a slot (37) which can be moved by the third drive (38) in and against the transport direction (A).

13. Device according to claim 12, **characterised in that** the third drive (38) is connected to the slot (37) by a belt drive (40) running parallel to the transport direction (A).

## Revendications

1. Procédé destiné à évacuer des récipients (2) se tenant debout, à partir d'un premier dispositif de transport (4), comprenant les étapes suivantes :
mise en place d'une section de guidage latérale (14), qui s'étend le long d'une direction de transport (A) des récipients (2) dans le premier dispositif de transport (4) ;
mise en place d'une unité de prise (18), qui présente une pluralité de griffes (26) pour la saisie des récipients (2) ;
**caractérisé par** les étapes :
déplacement essentiellement conjoint de la section de guidage latérale (14) et de l'unité de prise (18) à partir d'une position de réception pour les récipients (2), transversalement à la direction de transport (A) ;
déplacement de l'unité de prise (18) dans la direction de transport (A) en direction d'une position de distribution pour les récipients (2) ;
retour de la section de guidage latérale (14), transversalement à la direction de transport (A), dans la position de réception ; et
retour de l'unité de prise (18) dans le sens contraire à la direction de transport (A), puis transversalement à la direction de transport (A), dans la position de réception.

2. Procédé selon la revendication 1, **caractérisé en ce que** la section de guidage latérale (14) et l'unité de prise (18) sont déplacées à partir d'une position de réception pour les récipients (2), de façon essentiellement conjointe, transversalement à la direction de transport (A).

3. Procédé selon la revendication 2, **caractérisé en ce que**, pendant ou après le déplacement transversal de la section de guindage latérale (14) et de l'unité de prise (18), l'unité de prise (18) est déplacée dans la direction de transport (A) en direction d'une position de distribution pour les récipients (2).

4. Procédé selon la revendication 3, **caractérisé en ce qu'**il est prévu, dans la zone de la position de distribution, un second dispositif de transport (22) pour le transfert des récipients (2) amenés par l'unité de prise (18).

5. Procédé selon la revendication 4, **caractérisé en ce que** le second dispositif de transport (22) est entraîné en continu dans la direction de transport (A), et que la vitesse de déplacement de l'unité de prise (18) dans la direction de transport (A), à l'emplacement de la position de distribution, est essentiellement identique à la vitesse du second dispositif de transport (22).

6. Procédé selon l'une des revendications 3 à 5, **caractérisé en ce que**, après le déplacement de l'unité de prise (18) dans la direction de transport (A) en direction de la position de distribution, la section de guidage latérale (14) est de nouveau ramenée transversalement à la direction de transport (A) dans la position de réception.

7. Procédé selon la revendication 6, **caractérisé en ce que**, après ou pendant le retour de la section de guidage latérale (14) dans la position de réception, l'unité de prise (18) est ramenée dans le sens contraire à la direction de transport (A), puis déplacée transversalement à la direction de transport (A) dans la position de réception.

8. Dispositif destiné à évacuer des récipients (2) se tenant debout, à partir d'un premier dispositif de transport (4), comprenant :
une section de guidage latérale (14), qui s'étend le long d'une direction de transport (A) des récipients dans le premier dispositif de transport (4) ; et
une unité de prise (18) qui présente une pluralité de griffes (26) pour la saisie récipients (2) ;
la section de guidage latérale (14) étant déplaçable par l'intermédiaire d'un premier entraînement (21) transversalement à la direction de transport (A) et l'unité de prise (18) étant déplaçable, aussi bien transversalement à la direction de transport (A) par l'intermédiaire d'un deuxième entraînement (30), que dans le sens et dans le sens contraire à la direction de transport (A) par l'intermédiaire d'un troisième entraînement (38) ;
**caractérisé en ce que** l'unité de prise (18), dans la position de réception, pénètre au travers d'une fente horizontale (16) dans la section de guidage latérale (14).

9. Dispositif selon la revendication 8, **caractérisé en ce que** le premier entraînement (21), le deuxième entraînement (30) et le troisième entraînement (38) sont des servomoteurs.

10. Dispositif selon l'une des revendications 8 et 9, **caractérisé en ce que** le premier entraînement (21) est raccordé, par l'intermédiaire d'une broche (32) disposée transversalement à la direction de transport (A), à la rection de guindage latérale (14).

11. Dispositif selon l'une des revendications 8 à 10, **caractérisé en ce que** le deuxième entraînement (30) est raccordé à l'unité de prise (18) par l'intermédiaire d'une transmission par courroie (36), qui s'étend transversalement à la direction de transport (A).

12. Dispositif selon l'une des revendications 8 à 11, **caractérisé en ce que** l'unité de prisse (18) et le deuxième entraînement (30) sont fixés sur une chariot (37), déplaçable par le troisième entraînement (38) dans le sens et dans le sens contraire à la direction de transport (A).

13. Dispositif selon la revendication 12, **caractérisé en ce que** le troisième entraînement (38) est raccordé au chariot (37) par l'intermédiaire d'une transmission par courroie (40), qui s'étend parallèlement à la direction de transport (A).
